# EUROPEAN PATENT SPECIFICATION

(11) **EP 0 459 545 B1**
(45) Date of publication and mention of the grant of the patent: **02.02.1994**
(21) Application number: 91200966.9
(22) Date of filing: 22.04.1991
(51) Int. Cl.: B60R 21/20

(54) **Occupant restraint system**
Insassen-Rückhaltesystem
Système de retenue pour passagers

(30) Priority: 29.05.1990 US 529799
(43) Date of publication of application: 04.12.1991
(73) Proprietor: GENERAL MOTORS CORPORATION, Detroit Michigan 48202 (US)
(72) Inventor: Miller, Gregory Allen, Troy, MI 48098 (US); Jones, Robert Lee, Centerville, Ohio 45458 (US); Pearson, Jeffery Lynn, Rochester, MI 48064 (US)
(74) Representative: Denton, Michael John

(56) References cited:
- EP-A- 0 284 123
- DE-A- 2 905 618
- DE-A- 3 011 463
- US-A- 4 852 907
- US-A- 4 903 986

## Description

This invention relates to occupant restraint systems for vehicle drivers which permit initial deployment of the cushion along paths laterally of the driver should the cushion be unable to deploy along a normal, desired path towards the driver, as specified in the preamble of claim 1, for example as disclosed in US-A-4,903,986.

US-A-4,903,986 (Cok et al.) discloses a number of different embodiments of occupant restraint systems wherein the container for the folded occupant restraint cushion has its long side walls and base wall provided with tear lines to provide two sets of flaps. A first set of flaps permits deployment of the cushion through the base wall of the container along a desired, intended path of deployment towards the driver upon inflation of the cushion. A second set of flaps permits initial deployment of the cushion through portions of the long side walls of the container along alternative paths parallel to the driver should the cushion be unable to deploy along its desired, intended path of deployment.

The folded occupant restraint cushion includes a diametrical portion located underneath and opposite the base wall of the container, fan-folded chordal portions located opposite the long side walls of the container, and pleat-folded end portions located opposite the short end walls of the container.

An occupant restraint system according to the present invention is characterised by the features specified in the characterising portion of claim 1.

The system of this invention includes the same components as the system disclosed in US-A-4,903,986. However, the container includes a modified tear-line configuration pattern dividing the base wall and the side walls of the container into the two sets of flaps. A generally elongated I-shaped tear line configuration includes a pair of first tear lines, each having a major portion located in the base wall of the container generally parallel to and adjacent a juncture of the base wall with an upper edge of a respective outwardly-flared long side wall. The major portions of the first tear lines each include continuations in the form of end extensions which cross the junctures of the shorter end walls with the base walls and extend across the outwardly flared shorter end walls to adjacent the secured, lower edge portions thereof. In one modification, the extensions are co-planar with the major portions of the tear lines and are located adjacent the corner junctures of the short end walls with the long side walls. Alternatively, the extensions may follow the peak lines or the areas of the angular corner junctures between the long side walls and the short end walls. The extensions may also be provided by cutting away or removing all or part of said corner junctures. In all such modifications, the tear lines and extensions permit the entire long side walls of the container to fold outwardly about the secured, lower edge portions thereof to provide the second set of flaps. The major portions of the first tear lines are connected by a second tear line located generally intermediate the shorter end walls of the base wall of the container to complete the elongated I-shaped tear line configuration. The second tear line and the major portions of the first tear lines provide the container with the first set of flaps. The first flaps are hinged to the container about the junctures thereof with the shorter end walls and open oppositely of each other. The first flaps permit deployment of the cushion along the desired, intended path when the major portions of the first tear lines and the second tear line are severed and the first flaps are moved to an open position by the diametrical portion of the cushion upon inflation of the cushion.

Each of the second flaps,in all modifications of the end extensions of the major portions of the first tear lines, is comprised of an entire long side wall of the container, any parts of the corner junctures joined to the long side wall, and a portion of the base wall between a respective first tear line and the upper edge of a respective long side wall. Each second flap is hinged to the container about the lower, secured edge portion of a long side wall and is located opposite a fan-folded chordal portion of the cushion. When the cushion is inflated and is unable to initially deploy along its desired path through the first flaps, the fan-folded chordal portions of the cushion sever the tear lines and move the second flaps to an open position to permit initial deployment of the cushion parallel to the driver.

Should the cushion initially deploy through the second set of flaps, parallel to the driver, the end extensions of the major portions of the first tear lines will be initially severed. When the cushion subsequently deploys towards the driver along its normal, intended path, the portions of the short end walls between the end extensions will deploy as a unit with their respective first flaps to provide enlarged first flaps which open outwardly and oppositely of each other about the lower, secured edge portions of the short end walls. Once the end extensions are severed, the junctures of the short end walls with the base walls will effectively prevent the first flaps from pivoting relative to the short end walls and thus will force the enlarged first flaps to pivot about the lower, secured edge portions of the short end walls.

The primary feature of this invention is that it provides a generally rectangularly-shaped box-like container for an occupant restraint system having a base wall, long side walls and shorter end walls and being provided with an elongated I-shaped tear line configuration which provides outwardly and oppositely-opening first and second pairs of flaps, each flap of the second pair including an entire long side wall of the container and opening outwardly about the secured, lower edge portion thereof to permit deployment of the cushion along an alternative path generally parallel to the driver and laterally of the container should the cushion be unable to deploy along a normal path towards the driver through the first pair of flaps which include portions of the base wall of the container and which open oppositely of each other about their junctures with the shorter end walls of the container. Another feature is that the I-shaped tear line configuration includes a pair of first tear lines having major portions in the base wall of the container and continuations in the form of end extensions which cross the junctures of the base wall with the shorter end walls and extend to adjacent the secured, lower edge portions of the shorter end walls. A further feature is that the end extensions and major portions are co-planar. Yet another feature is that the shorter end walls are flared relative to the base wall and the end extensions follow the angular juncture of the shorter end walls with the long side walls. Yet a further feature is that the shorter end walls can open as a unit with the first pair of flaps about the lower, secured edge portions of the shorter end walls should the cushion initially deploy through the second set of flaps.

The invention and how it may be performed are hereinafter particularly described with reference to the accompanying drawings, in which:
Figure 1 is a top plan view of an occupant restraint system according to this invention;
Figure 2 is an enlarged sectional view taken along line 2-2 of Figure 1;
Figure 3 is a partial bottom plan view of a portion of the system shown in Figure 1;
Figure 4 is a perspective view of a container according to one embodiment of this invention;
Figure 5 is a view of the container of Figure 4 with a pair of second flaps opened to permit initial deployment of a cushion, not shown, along alternative paths parallel to a driver (not shown).
Figure 6 is a view of the container of Figure 4 with a pair of first flaps opened to permit deployment of the cushion, not shown, along a normal, intended path towards the driver (not shown).
Figure 7 is a perspective view of a folded and pleated cushion for installation in a container as shown in Figures 4, 5 and 6.

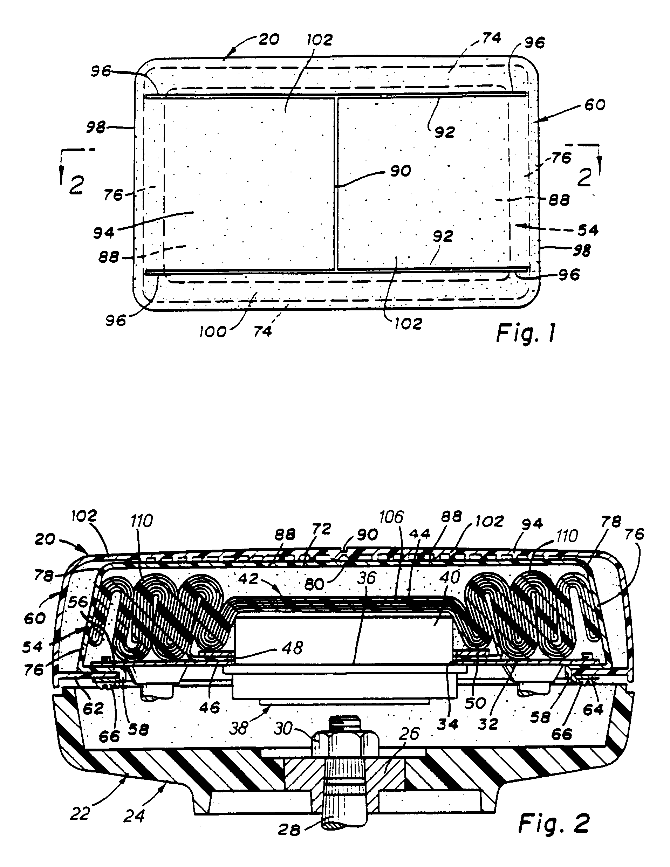

Referring now to Figures 1 to 3 of the drawings, a modular occupant restraint system 20 is shown mounted in a conventional manner to a hub portion 22 of a vehicle steering wheel 24. The hub portion includes a splined bushing 26 which receives an upper splined end of a vehicle steering shaft 28 and is bolted thereto with a nut 30 to secure the steering wheel to the vehicle steering system.

A substantially rectangularly-shaped support plate 32 has a central circular opening 34. A flange 36 of a conventional inflator 38 seats against a lower side of the plate 32 and is secured thereto in a conventional manner. An upper outlet portion 40 of the inflator 38 projects through the plate 32 and into the interior of a folded inflatable driver restraint cushion 42 of conventional construction. The cushion 42 includes upper and lower circular members 44 and 46 which are secured together at their circular edge portions. The upper cushion member 44 provides the impact surface of the cushion for the driver when the cushion is inflated, and the lower cushion member 46 has a central opening 48 which receives the upper outlet portion 40 of the gas generator therethrough. A ring 50 is fastened with fasteners (not shown) passing through apertures at 52 in the plate 32 around the opening 34 therein to clamp the cushion member 46 to the plate 32 around the opening 48 therethrough.

The inflator 38 is a gas generator which is electrically actuated from a conventional electrical power source when acceleration or velocity or other type sensors sense the impact of the vehicle with an obstacle or the possibility or probability of such an impact. Such sensors and the circuits connecting the sensors to a power source are well-known in the art. Likewise, inflators of the gas-generating type are also well-known in the art.

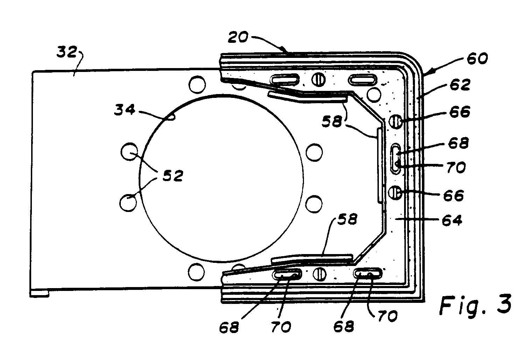

A container 54 for the cushion 42 is formed of plastics material and has a generally box-like rectangular shape. The container 54 houses the folded cushion 42 and has a flange 56 which underlies the plate 32 and has lateral flange segments 58 therealong, see Figures 2 and 3. An outer decorative cover 60 of flexible plastics material is of the same general shape as the container 54. The cover 60 has a flange 62 which overlies the flange 56 of the container. A retainer 64 overlies the flange 62 and is fastened by screws 66 to the support plate 32 to secure the container 54 and the cover 60 to the support plate. The flange 62 of the cover has lateral nub-like projections 68 which are received in openings 70 of the retainer 64. The plate 32 thus mounts the inflator 38, the cushion 42, the container 54, and the cover 60 to provide the modular restraint system 20.

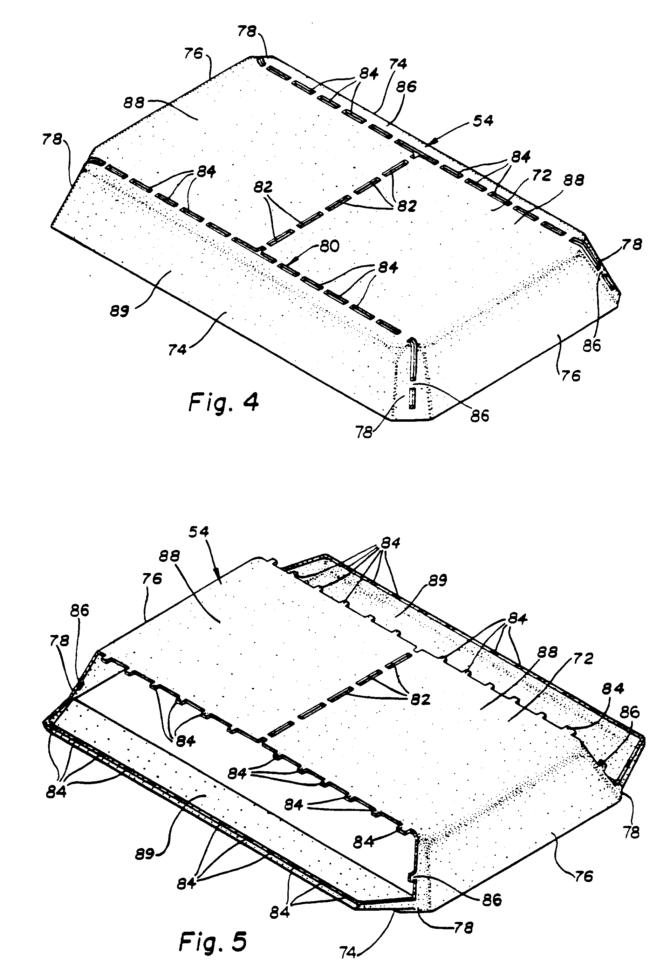

As shown in Figures 4 to 6, the container 54 has a generally planar base wall 72 which is integral with a pair of long side walls 74 and a pair of short end walls 76, with the side edges of the adjoining side walls 74 and end walls 76 being integrally joined to each other at corner junctures 78. The side walls 74 and end walls 76 and the corner junctures 78 are all outwardly flared at a slight outward angle to the base wall 72. It will be understood that the system 20 is mounted to the steering wheel, 24 with the base wall 72 facing the driver's torso, the side walls 74 extending transversely of the driver's torso, and the end walls 76 extending longitudinally of the driver's torso.

A generally elongated I-shaped tear-line configuration in the container 54 includes first tear lines 80 and a second tear line 82, each tear line consisting of a line of perforations. The first tear lines 80 have their major portions 84 located in the base wall 72 adjacent the juncture of the long sides of the base wall with each of the long side walls 74 of the container. Each first tear line 80 includes a pair of end extensions 86. The extensions 86 are shown as co-planar with the first tear lines 80. The extensions 86 terminate adjacent the lower, secured edge portions of the short end walls 76. In one modification, the extensions 86 may follow the peak lines of the corners 78 or be located adjacent said peak lines. In another modification, the extensions 86 may be in the form of slotted openings resulting from removal of all or part of the corners 78.

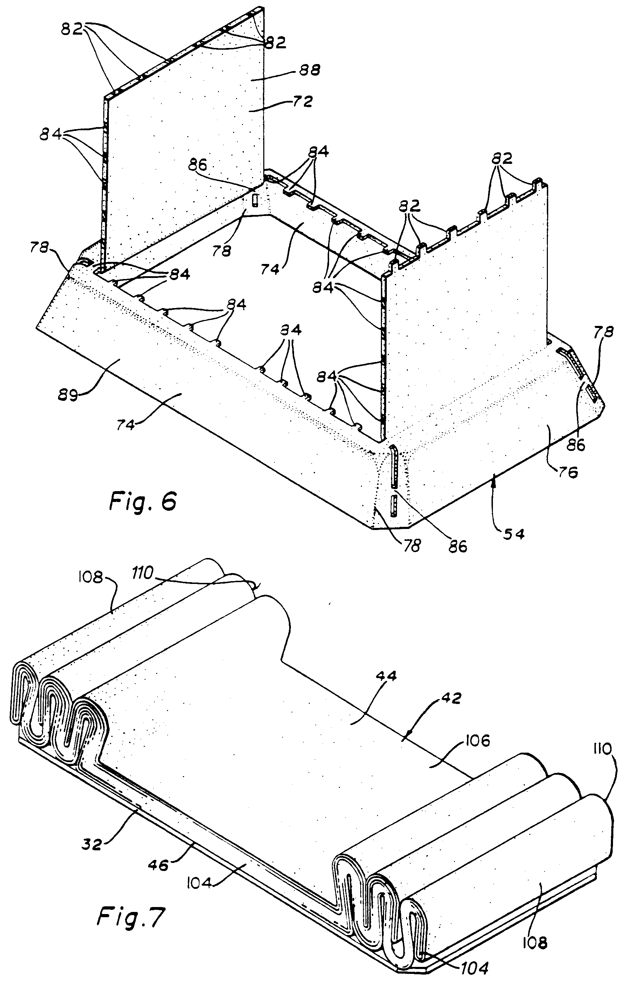

The major portions 84 of the first tear lines 80 and the second tear line 82 define a pair of oppositely-opening first flaps 88 which are hinged to the container 54 about the junctures of the base wall 72 to the short end side walls 76. The flaps 88 are moved to their open position, as shown in Figure 6, by the diametrical portion 44 of the inflating cushion 42 and permit deployment of the cushion 42 along its normal, intended path towards the driver. The cushion 42 is not shown in Figure 6 for clarity.

The major portions 84 of the first tear lines 80 and extensions 86 thereof, in all modifications of said extensions, define a pair of oppositely-opening second flaps 89 which are hinged to the container about the lower, secured edge portions of the long side walls 74, at the junctures of the long side walls 74 to the flanges 56. The flaps 89 are moved to their open position as shown in Figure 5 by the fan-folded chordal portions of the inflating cushion 42 and permit initial deployment of the cushion 42 along an alternative path substantially parallel to the driver and laterally of the container 54 should the cushion 42 be unable to initially deploy along its normal, intended path. The cushion 42 is not shown in Figure 5 for clarity. Each flap 89 includes an entire side wall 74 of the container, the portion of the base wall 72 between a major tear line portion 84 and the upper edge of said side wall 74, and any parts of the corners 78 joined to or integral with said side wall 74.

As can be seen from Figure 1, the cover 60 has moulded-in lines 90 and 92 in its base wall 94, and moulded-in lines 96 in its short end walls 98. The side walls and end walls of the cover 60 overlie and are substantially co-extensive with the corresponding side walls and end walls of container 54. The moulded-in lines 90, 92, and 96 are respectively aligned with the lines of perforations 82, 84, and 86 of container 54. The lines 92 and 96 define a first pair of integrally-hinged flaps 100 in the long side walls of cover 60. The flaps 100 are respective to and substantially co-extensive with the underlying flaps 89 of container 54. The lines 90 and 92 define a second pair of integrally-hinged flaps 102 in base wall 94, these flaps being respective to and substantially co-extensive with the underlying flaps 88 of the container 54. The hinge lines or hinge axes of flaps 100 and 102 are generally aligned with the hinge lines of the respective flaps 89 and 88 of container 54. The cover 60 is not shown in Figures 4 to 6 for clarity. The lines 92 and 96 may be used even though the extensions 86 follow the peak lines of corners 78, are adjacent said peak lines, or are in the form of slots resulting from removal of all or part of the corners 78.

Referring now to Figure 7, the cushion 42 will be described. The cushion 42 is of conventional construction and includes the circular cushion members 44 and 46 which are secured together along their circular edge portions. The cushion members 44 and 46 are folded as set forth in US-A-4,903,986 (Cok et al.) to provide fan-folded chordal portions 104 and a diametrical portion 106. The cushion is then pleat-folded at 110 to provide the fully-folded cushion 42 with pleat-folded end portions 108. This folded cushion 42 is housed within the container 54 with the fan-folded chordal portions 104 of the cushion being located opposite the long side walls 74 of the container 54 and the pleat-folded end portions 108 of the cushion being located opposite the short end walls 76 of the container 54, as shown in Figure 2.

When the inflator 38 receives an appropriate electrical signal, the inflator generates gas which exits from the outlet portion 40 of the inflator, see Figure 2, into the folded cushion 42 through the opening 48 in the cushion member 46 to initiate inflation and deployment of the cushion. During normal deployment, the diametrical portion 106 of the inflating cushion 42 forcefully engages the base wall 72 of the container as the cushion 42 is initially inflated. This separates wall 72 along the lines of perforations 82 and 84 into the oppositely outwardly-opening flaps 88, as shown in Figure 6, which are integrally hinged to the upper edges of the side walls 76. This permits the inflating cushion 42 to deploy along its normal, intended path towards the driver's torso as the fan-folded chordal portions 104 unfold into continuations of the cushion members 44 and 46. The cover 60 and cushion 42 are not shown in Figure 6 for clarity. The base wall 94 of cover 60 separates into flaps 102 which are substantially co-extensive with flaps 88.

Should the cushion 42 be unable to initially deploy along its normal, intended path, such as by base wall 94 being obstructed so that it and base wall 72 cannot be separated into the flaps 102 and 88 by the force exerted by of the diametrical portion 106 of the inflating cushion 42 against wall 72, the fan-folded chordal portions 104 will start to unfold and exert pressure against the side walls 74 of the container 54. The force exerted by the unfolding fan-folded chordal portions 104 against walls 74 will separate these walls along the lines of perforations 84 and 86 into the oppositely-opening integrally-hinged flaps 89. The cover 60 will generally likewise separate along the lines 92 and 96 into the oppositely outwardly-opening flaps 100 which open substantially simultaneously with their respective flaps 89. This permits the fan-folded chordal portions 104 of the cushion 42 to unfold outwardly through the resultant openings, along alternative paths extending generally laterally of the system 20 and parallel to the driver's torso. The force at which walls 74 separate into flaps 89 is determined by the material of the container 54, the thickness of the walls 74, the extent and spacing of the perforations of portions 84 and extensions 86, and whether extensions 86 are in the form of slots. Likewise, the depth of lines 92 and 96 and the material of the cover are selected so that the flaps 100 open substantially simultaneously with the flaps 89.

Should the cushion 42 initially deploy through the flaps 89 and 100 parallel to the driver, the perforations of extensions 86 will have been severed with the perforations of the major portions 84 and the moulded-in lines 96 will have been severed with the moulded-in lines 92. When the inflating cushion 42 subsequently deploys through the flaps 88 and 102, the portions of the end walls 76 between extensions 86 will open with flaps 88 as a unit therewith and the portions of walls 98 between lines 96 will open with flaps 102 as a unit therewith. The junctures 78 will prevent any hinging of flaps 88 relative to end walls 76 so that each flap 88 and respective end wall 76 will open outwardly about the respective secured lower edge portion of the end wall 76 to flange 56, and, similarly, each flap 102 and respective end wall 98 will open outwardly about the secured lower edge portion of the end wall 98. Thus, both flaps 88 and 102 will be enlarged by including the short end walls of their respective container 54 and cover 60 should the inflating cushion initially deploy through the flaps 89 and 100.

Although this invention has been shown and described with a container for the folded cushion and a cover for the container, it should be recognized that the container and cover can be combined into one member performing both functions.

Thus, this invention provides an occupant restraint system which permits initial deployment of the cushion along alternative paths of deployment generally parallel to of the driver's torso should the cushion be unable to deploy along its intended path towards the driver's torso.

## Claims

1. An occupant restraint system (20) comprising a support (32); a box-like container (54) including a base wall (72) and pairs of spaced side walls (74) and end walls (76) joined to the base wall (72) along upper edges thereof and joined to each other along corner edges (78) thereof; a folded inflatable occupant restraint cushion (42) within the container (54), the cushion (42) being folded to provide a first portion (106) opposite the base wall (72) of the container (54) and spaced second portions (104), each of which second portions (104) is located opposite a respective side wall (74) of the container (54); first separable means (80) in the base wall (72) of the container (54) adjacent each juncture thereof with the upper edge of a side wall (74) of the container (54), second separable means (82) joining the first separable means (80) intermediate the end walls (76) of the container (54) and defining therewith a pair of oppositely-opening separable first flaps (88) in the base wall (72) of the container (54) which are hinged to the upper edges of the side walls (74), the first flaps (88) being separable from the container (54) and movable to an open position by the first portion (106) of the cushion (42) upon initial inflation of the cushion (42) so as to permit initial deployment of the inflating cushion (42) along an intended path towards an occupant for the system (20); the first separable means (80) including extensions (86) thereof defining a pair of oppositely-opening second flaps (89), and, should the first portion (106) of the cushion (72) be unable to open the first pair of flaps (88) to permit initial deployment of the cushion (42) along the intended path towards said occupant upon inflation of the cushion (42), the second flaps (89) are separable from the container (54) and are moved to an open position by the second portions (104) of the inflating cushion (42) so as to permit initial deployment of the inflating cushion (42) along paths parallel to said occupant, characterised in that each of the extensions (86) of each of the first separable means (80) is located adjacent the corner edges (78) of the end walls (76); each of the second flaps (89) includes a complete side wall (74) of the container (54) hinged to the support (32) about a lower edge thereof, and the portion of the base wall (72) joined thereto; and, in the event of the initial deployment of the inflating cushion (42) along paths parallel to said occupant, the end walls (76) move with the first flaps (88) to an open position about hinged lower edges of said end walls (76) upon subsequent deployment of the inflating cushion (42) along the intended path towards said occupant.

2. An occupant restraint system (20) according to claim 1, characterised in that the first separable means (80) and the second separable means (82) both comprise lines of perforations formed in the walls of the container (54); and in that each of the first separable means (80) comprises a major portion (84), in which the perforations are formed in the base wall (72) of the container (54), and two co-linear extensions (86), in each of which the perforations are formed along a respective corner juncture (78) between a respective side wall (74) and a respective end wall (76), and are co-planar with the line of perforations forming the major portion (84) of the respective first separable means (80).

## Patentansprüche

1. Ein Insassen-Rückhaltesystem (20) mit einem Träger (32); einem kastenartigen Behälter (54), der eine Bodenwand (72) und Paare beabstandeter Seitenwände (74) und Stirnwände (76) einschließt, die mit der Bodenwand (72) entlang deren Oberkanten verbunden sind und miteinander entlang deren Eck-Kanten (78) verbunden sind; einem gefalteten aufblasbaren Insassen-Rückhaltekissen (42) innerhalb des Behälters (54), wobei das Kissen (42) gefaltet ist, um ein erstes Teilstück (106) gegenüber der Bodenwand (72) des Behälters (54) und beabstandete zweite Teilstücke (104) zu schaffen, von welchen zweiten Teilstücken (104) jedes gegenüber einer jeweiligen Seitenwand (74) des Behälters (54) angeordnet ist; einem ersten trennbaren Mittel (80) in der Bodenwand (72) des Behälters (54), das jeder Verbindungsstelle davon mit der Oberkante einer Seitenwand (74) des Behälters (54) benachbart ist; einem zweiten trennbaren Mittel (82), welches zwischen den Stirnwänden (76) des Behälters (54) gelegen das erste trennbare Mittel (80) verbindet und damit ein Paar sich entgegengesetzt öffnender, trennbarer erster Klappen (88) in der Bodenwand (72) des Behälters (54) definiert, die mit den Oberkanten der Seitenwände (74) drehbar verbunden sind, wobei die ersten Klappen (88) von dem Behälter (54) trennbar sind und in eine offene Position durch das erste Teilstück (106) des Kissens (42) auf eine anfängliche Aufblähung des Kissens (42) hin bewegt werden können, um für das System (20) eine anfängliche Entfaltung des sich aufblähenden Kissens (42) entlang eines beabsichtigten Weges auf einen Insassen zu zu gestatten; wobei das erste trennbare Mittel (80) unter Einschluß von dessen Fortsätzen (86) ein Paar sich entgegengesetzt öffnender zweiter Klappen (89) definiert, und, sollte das erste Teilstück (106) des Kissens (42) nicht in der Lage sein, das erste Paar von Klappen (88) zu öffnen, um eine anfängliche Entfaltung des Kissens (42) entlang des beabsichtigten Weges auf den Insassen zu auf eine Aufblähung des Kissens (42) hin zu gestatten, sind die zweiten Klappen (89) von dem Behälter (54) trennbar und werden in eine offene Position durch die zweiten Teilstücke (104) des sich aufblähenden Kissens (42) bewegt, um eine anfängliche Entfaltung des sich aufblähenden Kissens (42) entlang von Wegen zu gestatten, die zu dem Insassen parallel verlaufen, dadurch gekennzeichnet, daß jeder der Fortsätze (86) von jedem der ersten trennbaren Mittel (80) den Eck-Kanten (78) der Stirnwände (76) benachbart angeordnet ist; jede der zweiten Klappen (89) eine vollständige Seitenwand (74) des Behälters (54), die drehbar mit dem Träger (32) um eine Unterkante davon verbunden ist, und das Teilstück der Bodenwand (72), das damit verbunden ist, einschließt; und in dem Fall der anfänglichen Entfaltung des sich aufblähenden Kissens (42) entlang von Wegen parallel zu dem Insassen die Stirnwände (76) sich mit den ersten Klappen (88) in eine offene Position um drehbar verbundene Unterkanten der Stirnwände (76) auf eine anschließende Entfaltung des sich aufblähenden Kissen (42) hin entlang des beabsichtigten Weges auf den Insassen zu bewegen.

2. Ein Insassen-Rückhaltesystem (20) nach Anspruch 1, dadurch gekennzeichnet, daß das erste trennbare Mittel (80) und das zweite trennbare Mittel (82) beide Perforationslinien aufweisen, die in den Wänden des Behälters (54) ausgebildet sind; und dadurch, daß jedes der ersten trennbaren Mittel (80) ein Hauptteilstück (84), in welchem die Perforationen in der Bodenwand (72) des Behälters (54) ausgebildet sind, und zwei kollineare Fortsätze (86) aufweist, in denen jeweils die Perforationen entlang einer jeweiligen Eck-Verbindungsstelle (78) zwischen einer jeweiligen Seitenwand (74) und einer jeweiligen Stirnwand (76) ausgebildet sind und mit der Linie von Perforationen koplanar sind, die das Hauptteilstück (84) des jeweiligen ersten trennbaren Mittels (80) bildet.

## Revendications

1. Système (20) de retenue d'occupant comprenant un support (32); un récipient (54) en forme de boîte qui comprend une paroi de base (72) et des paires de parois latérales (74) et parois terminales (76) espacées, réunies à la paroi de base (72) le long de leurs bords supérieurs, et réunies les unes aux autres le long de leurs bords de coins (78); un coussin (42) de retenue d'occupant gonflable, plié, placé à l'intérieur du récipient (54), le coussin (42) étant plié de manière à comprendre une première partie (106) en regard de la paroi de base (72) du récipient (54) et des deuxièmes parties (104) espacées, chacune des deuxièmes parties (104) est placée en regard d'une paroi latérale (74) respective du récipient (54); des premiers moyens séparables (80) prévus dans la paroi de base (72) du récipient (54) dans une position adjacente à chaque jonction de cette paroi de base avec le bord supérieur d'une paroi latérale (74) du récipient (54), des deuxièmes moyens séparables (82) qui réunissent les premiers moyens séparables (80) entre les parois terminales (76) du récipient (54) et définissent avec eux une paire de premiers volets (84) séparables, s'ouvrant en regard l'un de l'autre, dans la paroi de base (72) du récipient (54), qui s'articulent aux bords supérieurs des parois latérales (74), les premiers volets (84) pouvant se séparer du récipient (54) et être amenés à une position ouverte par la première partie (106) du coussin (42) à la suite du gonflage initial du coussin (42) de manière à permettre un déploiement initial du coussin gonflable (42) le long d'une trajectoire de calcul en direction d'un occupant du système (20); les premiers moyens séparables (80) comprenant des prolongements (86) qui définissent une paire de deuxièmes volets (89) s'ouvrant l'un en regard de l'autre et, si la première partie (106) du coussin (72) est incapable d'ouvrir la première paire de volets (88) pour permettre un déploiement initial du coussin (42) selon la trajectoire de calcul en direction dudit occupant à la suite du gonflage du coussin (42), les deuxièmes volets (89) peuvent se séparer du récipient (54) et être amenés à une position ouverte par les deuxièmes parties (104) du coussin gonflable (42), de manière à permettre un déploiement initial du coussin gonflable (42) le long de trajectoires parallèles audit occupant, caractérisé en ce que chacun des prolongements (86) de chacun desdits premiers moyens séparables (80) est placé adjacent aux arêtes (78) de coin des parois terminales (76); chacun des deuxièmes volets (89) comprend une paroi latérale (74) complète du récipient (54) articulée au support (32) pour tourner autour d'un bord inférieur de ce dernier, et la partie de la paroi de base (72) qui y est réunie; et, dans le cas où le déploiement initial du coussin gonflable (42) se produit le long de trajectoires parallèles audit occupant, les parois terminales (76) viennent avec les premiers volets (88) se placer dans une position ouverte en tournant autour des bords inférieurs articulés desdites parois terminales (76) à la suite du déploiement ultérieur du coussin gonflable (42) le long de la trajectoire de calcul en direction de l'occupant.

2. Système (20) de retenue d'occupant selon la revendication 1, caractérisé en ce que les premiers moyens séparables (80) et les deuxièmes moyens séparables (82) comprennent tous deux des lignes de perforations formées dans les parois du récipient (54); et en ce que chacun des premiers moyens séparables (80) comprend une partie principale (84) dans laquelle les perforations sont formées dans la paroi de base (72) du récipient (54) et deux prolongements (86) situés sur la même ligne, dans chacun desquels les perforations sont formées le long d'une jonction de coin (78) respective d'une paroi latérale (74) respective avec une paroi terminale (76) respective et sont coplanaires avec la ligne de perforations formant la partie principale (84) des premiers moyens séparables (80) respectifs.
